# EUROPEAN PATENT SPECIFICATION

(11) **EP 3 244 571 B1**
(45) Date of publication and mention of the grant of the patent: **16.10.2019**
(21) Application number: 16746079.9
(22) Date of filing: 26.01.2016
(51) Int. Cl.: H04L 12/24, H04Q 11/00

(54) **CONFIGURATION DATA DISTRIBUTION METHOD AND APPARATUS**
KONFIGURATIONSDATENVERTEILUNGSVERFAHREN UND -VORRICHTUNG
PROCÉDÉ ET APPAREIL DE DISTRIBUTION DE DONNÉES DE CONFIGURATION

(30) Priority: 04.02.2015 CN 201510059435
(43) Date of publication of application: 15.11.2017
(73) Proprietor: ZTE Corporation, Shenzhen city, Guangdong 518057 (CN)
(72) Inventor: GAO, Minghui, Shenzhen Guangdong 518057 (CN); YU, Chendong, Shenzhen Guangdong 518057 (CN); MA, Huannan, Shenzhen Guangdong 518057 (CN)
(74) Representative: Regimbeau
(86) International application number: PCT/CN2016/072198
(87) International publication number: WO 2016/124084

(56) References cited:
- EP-A1- 2 451 096
- WO-A1-2010/028578
- CN-A- 102 082 979
- CN-A- 102 217 245
- US-A1- 2014 023 366
- US-B1- 8 705 533

## Description

### TECHNICAL FIELD

The present invention relates to the technical field of communications, and particularly relates to a configuration data distribution method and apparatus.

### BACKGROUND

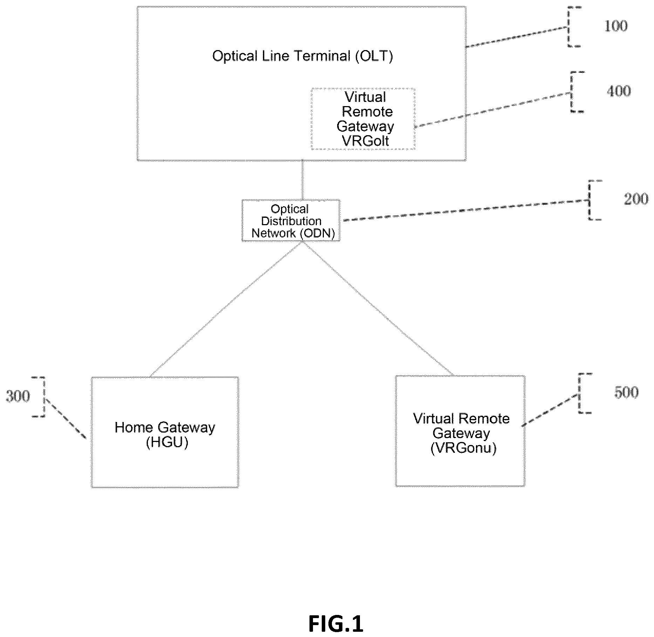

A common networking system is shown in Fig. 1 in G-PON (Gigabit-capable Passive Optical Network)/EPON (Ethernet Passive Optical Network) devices of a passive optical network (PON) and other PON operation networks (xPON networks for short). The system is composed of an OLT (Optical Line Terminal), an ODN (Optical Distribution Network) and a plurality of ONUs (Optical Network Units), wherein the OLT serves as a central office device to forward services to an upper device through an SNI (Service Node Interface) and is connected and converged with a plurality of ONU devices through the ODN, and the ONU devices complete final access of user services through a UNI (User Node Interface), thereby realizing multiple functions, such as service transport, configuration, management and the like. The xPON is used as a "point-to-multipoint" topological structure: a transport direction from the OLT to the ONU is a downlink direction, data is transmitted in a broadcast mode in the downlink direction, and whether the data is valid and should be received or discarded is judged by the ONUs according to data identifiers; a transport direction from the ONU to the OLT is an uplink direction, TDM (Time Division Multiplexing) or WDM (Wavelength Division Multiplexing) may be adopted in the uplink direction according to different mechanisms: in the TDM, the TDM is adopted in the uplink direction, and an uplink burst signal must be transmitted by the ONU according to an uplink bandwidth time slot distributed by the OLT; and in the WDM, ONU uplink data is carried in a specific operating wavelength. In the xPON network, a single PON port of the OLT distinguishes and manages each ONU through a unique identifier: in the EPON, an MAC (Medium Access Control) address is a physical identifier of the ONU, and in the GPON, an SN (Serial Number) is the physical identifier of the ONU. Registration of each ONU on the PON system is completed through the physical identifier, and logic opening authentication is completed through the MAC address, the SN, a logical ONU identifier (LOID), a password (PW) and the like; and similar identifiers may be used in other PToMP networks and are configured to distinguish the OLT and manage each of the ONUs.

The ONUs can be managed by the OLT through a built-in OAM (Operation Administration and Maintenance) channel, and different xPONs are realized by adopting different OAM protocols respectively. For example, the EPON system adopts an extended OAM protocol, and the GPON system adopts an OMCI (ONU Management and Control Interface) protocol. By virtue of the protocols above, ONU service configuration is distributed to the ONUs to be locally effective, and service forwarding of the ONUs is guaranteed. Therefore, the ONUs not only complete basic physical line functions, but also need to realize two-layer or three-layer service transformation functions and other service-related functions as required.

Devices in the xPON system can be distributed to multiple usage scenarios such as FTTB (Fiber to The Building), FTTH (Fiber to the Home) and the like according to quantity of user ports and service forms of the ONUs, wherein the FTTH scenario is a scenario applied most widely at present, is generally connected with a home gateway unit through an SFU (Single Fiber Unit) to access multiple services of home users, such as broadband Internet, voice and IPTV (Interactive Personality TV), and can be directly accessed to an uplink HGU (Home Gateway Unit) of the PON. However, in the two manners above, since the home gateway is remotely deployed and functions such as related user access, service identification and transformation and the like need to be realized, defects of high cost and maintenance difficulty exist. With respect to the problems, a core function of the home gateway can be realized on an xPON OLT device, so that a device in the user home becomes a simple device with a line function only, thereby reducing technical complexity and a maintenance workload of a user-side home gateway device. The technology is called a virtual remote gateway, that is, a VRG technology. According to the technology, network maintenance cost can be effectively reduced, so that the traditional PON uplink home gateway unit and two different home access devices with the line function only may simultaneously exist under the same GPON OLT device. However, a solution of performing unified configuration and management on the two home access devices cannot be proposed in the scenarios above in the existing art. Apparently, a method for performing unified configuration and management on different gateways needs to be proposed.
WO2010/028578A1 provides a method for sensing the service provider on an optical network device. The optical network device has one or more user-side physical ports.The method includes the following steps: detecting link states of the one or more user-side physical ports; after determining, according to the link state of one user-side physical port, a need for acquiring information of the service provider corresponding to the user-side physical port, receiving an uplink message carrying the information of the service provider via the user-side physical port; and obtaining and recording the information of the service provider from the uplink message.
EP2451096A1 provides a method and an apparatus for transmitting information in a passive optical network. The method includes: obtaining OAM information that an RE device needs to report to an OLT device, performing modulation processing, according to the OAM information, on a downlink optical signal sent by the OLT device, and returning the downlink optical signal after the modulation processing to the OLT device; or, obtaining OAM information that an OLT device needs to deliver to an RE device, performing modulation processing, according to the OAM information, on a downlink optical signal sent by the OLT device to the RE device, and sending the downlink optical signal after the modulation processing to the RE device. Accordingly, OAM information can be transmitted between the RE device and the OLT device, and the administration and control function for the all-optical RE device by the OLT device can be implemented, without affecting the existing PON system or increasing the line speed of the PON.

### SUMMARY

The present invention provides a configuration data distribution method according to claim 1 and a configuration data distribution apparatus according to claim 6, used for solving a problem in an existing art that a unified configuration management solution on two home gateway access devices does not exist. Further embodiments of the method are provided in claims 2 -5. Further embodiments of the apparatus are provided in claims 7 -10.

According to embodiments of the present invention, the configuration data is encapsulated according to a preset configuration data encapsulation manner corresponding to the identifiers of the terminals, and distributed to the corresponding gateways according to the encapsulation manner of the configuration data or the identifiers of the terminals, so that the terminals using different gateways are managed and configured in a unified manner.

### BRIEF DESCRIPTION OF DRAWINGS

Drawings described herein are used for providing a further understanding of the present invention and forming part of the present application. Illustrative embodiments of the present invention and descriptions thereof are used for explaining the present invention, rather than forming an improper limitation to the present invention. In the drawings:
Fig. 1 is a structural block diagram illustrating a networking system of G-PON/EPON in an existing art;
Fig. 2 is a flow chart illustrating a configuration data distribution method in embodiment I of the present invention;
Fig. 3 is a flow chart illustrating a configuration data distribution method in embodiment II of the present invention;
Fig. 4 is a structural block diagram illustrating a configuration data distribution apparatus of the present embodiment.

### DETAILED DESCRIPTION

The present invention provides a configuration data distribution method and apparatus, for solving a problem in an existing art that a unified configuration management solution of two home gateway access devices does not exist. The present invention will be further described in detail below in combination with drawings and embodiments. It should be understood that specific embodiments described herein are used for explaining the present invention only rather than limiting the present invention.

### Embodiment I

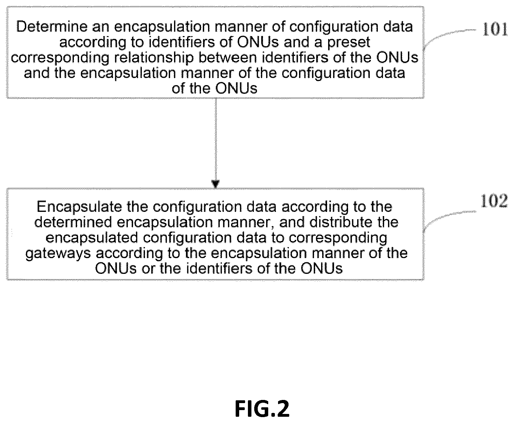

The present embodiment provides a configuration data distribution method. The method can be implemented by an OLT and is mainly used for achieving purposes of distinguishing encapsulation manners of configuration data belonging to different gateways and distributing the configuration data to the gateways to which the configuration data belongs. Fig. 2 is a flow chart illustrating a configuration data distribution method in embodiment I of the present invention. As shown in Fig. 2, the method may specifically include following processing.

In step 101: an encapsulation manner of configuration data is determined according to identifiers of the ONUs and a preset corresponding relationship between the identifiers of the ONUs and the encapsulation manner of the configuration data of the ONUs;
in the step 101, the identifiers of the ONUs may include registration identifiers reported when the ONUs are online, other authentication data capable of identifying the ONUs or types of the ONUs.

In step 102: the configuration data is encapsulated according to the determined encapsulation manner, and the encapsulated configuration data is distributed to corresponding gateways according to the encapsulation manner of the ONUs or the identifiers of the ONUs.

After the step 102, whether the configuration data is service-related data or line-related data is judged under the condition that the configuration data is judged to correspond to a virtual remote gateway, the service-related data is distributed to a gateway virtual unit on the OLT side and taken into effect if the configuration data is the service-related data, and the line-related data is distributed to a remote line unit through an extended OAM/OMCI channel if the configuration data is the line-related data.

On the basis of the step 101, in order to more efficiently determine the encapsulation manner of the configuration data at a great configuration data volume, optionally the step 101 can be implemented according to following specific manners:
a preset user data configuration template needed for encapsulating the configuration data is determined according to the identifiers of the ONUs, wherein a data encapsulation manner is specified in the user data configuration template; and herein, specific steps of presetting the user data configuration template are as follows:
user data configuration templates corresponding to types of gateways are created according to the types of the gateways used by the ONUs, and a corresponding relationship between the user data configuration templates and the identifiers of the ONUs is set before the encapsulation manner of the configuration data is determined according to the identifiers of the ONUs.

The encapsulating the configuration data according to the determined encapsulation manner and distributing the encapsulated configuration data to corresponding gateways according to the encapsulation manner of the ONUs or the identifiers of the ONUs based on the preset user data configuration template may specifically include:
whether the configuration data corresponds to an entity home gateway or a virtual remote gateway is judged according to the encapsulation manner of the configuration data when the ONUs corresponding to the current entity home gateway or virtual remote gateway are online;
whether the configuration data corresponds to the entity home gateway or the virtual remote gateway is judged according to identifiers reported by the ONUs when the ONUs corresponding to the current entity home gateway or virtual remote gateway are newly online;
the configuration data is distributed to a virtual remote gateway module and line units in a user home according to functional partitioning of the virtual remote gateway module on an optical line terminal (OLT) and the line units in the user home under a condition that the configuration data is judged to correspond to the virtual remote gateway; and
service configuration data is distributed to the entity home gateway through the OAM/OMCI channel under a condition that the configuration data is judged to correspond to the entity home gateway.

According to the method provided by the present embodiment, convenient HGU/VRG management and automatic service fulfillment can be realized in xPON present network applications by establishing corresponding relationships between identifiers of device terminals and the user data configuration templates, and specific user configuration can be neglected so as to automatically realize functions such as distribution of the configuration data, service restoration and the like. Operation and maintenance needs of xPON network operators are met, and needs of terminal users are also met while service implementation complexity of user-side terminal devices is reduced and operation and maintenance cost is reduced.

### Embodiment II

The present embodiment provides a method for realizing centralized unified configuration and management in a passive optical network system based on a hybrid networking condition that a traditional home gateway unit and a virtual remote gateway unit are intelligently accessed to two devices. Identifiers of terminals of VRG (including but not limited to MAC of EPON or SN of GPON, or PW (password)/LOID (Logical ID) and other authentication related parameters capable of performing unique identification on ONUs and the like) are bound to different user data configuration templates, and the OLT automatically calls different user data configuration templates according to terminal type identifiers after the terminal of the HGU/VRG is preliminarily online and a management channel is established, thereby realizing a method for automatically managing and opening different HGU/VRG services in one xPON network.

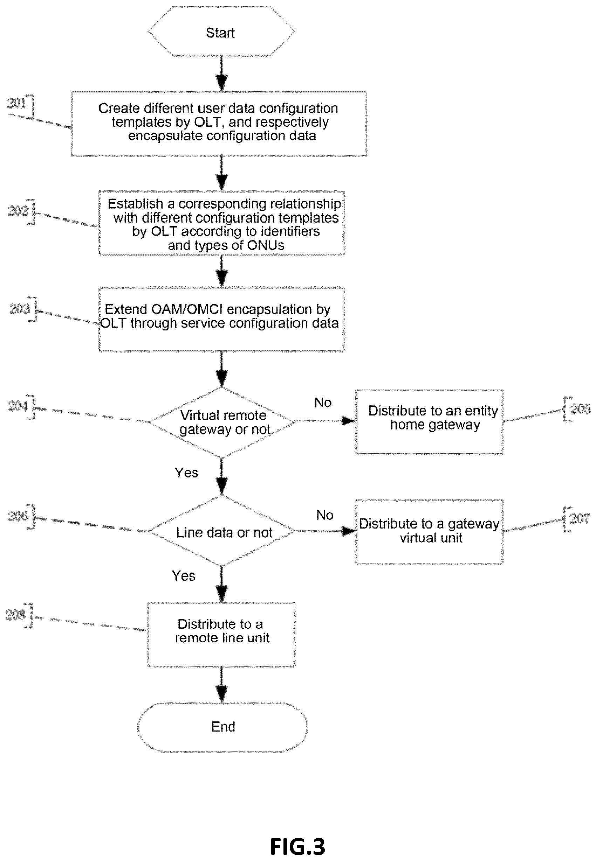

In the present embodiment, according to an implementation sample in the xPON network according to a configuration method distribution method proposed by the present invention, configuration of corresponding data is completed on the OLT according to actual service needs, and data configuration and management are completed between the OLT and a terminal device through the extended OAM/OMCI channel. Fig. 3 is a flow chart illustrating a configuration data distribution method in embodiment II of the present invention. As shown in Fig. 3, the method may specifically include following steps:
S201: user data configuration templates are respectively created by the OLT with respect to users using the traditional home gateway units, that is, the entity home gateway and the virtual remote gateway, and are used for distinguishing two different user devices, wherein data encapsulated by different user data configuration templates are different;
S202: registration identifiers and types are reported when the ONUs are online, and corresponding relationships with different user data configuration templates are established by the OLT according to the ONU registration identifiers (or other authentication data capable of identifying the ONUs) and types of the ONUs;
S203: service configuration data is subjected to extended OAM/OMCI encapsulation by the OLT according to specific types of the ONUs by referring to different user data configuration templates. The specific configured service data can neglect differences of the two different devices, is configured according to service data needed by normal traditional home gateway units, and includes but not limited to corresponding ONU ID numbers, LLID (Logical Link Identify) or Gem-Port, DBA (Dynamic Bandwidth Allocation), VLAN (Virtual Local Area Network) and other service channel related parameters. The configuration data further includes interface rates, operating modes and other physical port parameters of corresponding terminal devices and other related parameters.
S204: the related configuration data is directly distributed when a remote line unit corresponding to the entity home gateway or the virtual remote gateway is online, otherwise the data is saved on the OLT and then distributed after the devices above are online.

The configuration data needs to be distributed to the entity home gateway or a virtual remote gateway module on the xPON OLT device and the remote line unit according to judgment of the user data configuration templates. For configuration data of the virtual remote gateway, the configuration data needed by service fulfillment can be respectively distributed to the virtual remote gateway module on the OLT and line units in user home according to function module partitioning and is adopted and distributed to extended OAM frames/OMCI frames similar to entity home gateway units in a unified manner.

S205: The OLT judges whether newly online ONUs belong to the virtual remote gateway according to the identifiers and types of the ONUs and performs corresponding processing when the ONUs are online. All the data are distributed onto the entity home gateway through the extended OAM/OMCI channel by referring to corresponding user data configuration templates and are taken into effect on the entity home gateway when the newly online ONUs are judged to not belong to the virtual remote gateway.

S206: The corresponding user data configuration templates are referred and distribution positions of the service data are judged according to the judgment whether the configuration data is line data if the newly online ONUs are judged to belong to the virtual remote gateway.

S207: Service-related data is distributed to a gateway virtual unit on the OLT side and taken into effect if the configuration data is the service-related data (including but not limited to service marking, service forwarding, routing and other related configurations).

S208: The configuration data is distributed to the remote line unit through the extended OAM/OMCI channel and taken into effect on the remote line unit if the configuration data is the line-related data, and finally service distribution of the virtual remote gateway is completed.

Corresponding virtual remote gateway modules are notified to stop working through inside information of the xPON OLT if the line unit corresponding to the virtual remote gateway is power-off; configuration of the virtual remote gateway is redistributed to the virtual remote gateway modules and remote line units according to the method above after the xPON OLT detects that the line unit is electrified, thereby ensuring timely service restoration of terminal users; and configuration of the entity home gateway is redistributed to the entity home gateway according to the method above after the xPON OLT detects that the entity home gateway is electrified, thereby ensuring timely service restoration.

### Embodiment III

As shown in a schematic diagram of a system in Fig. 1, the system provided by the present embodiment includes OLT100, ODN200, HGU300, VRGolt400 and VRGonu500, wherein the OLT100 is configured to generate related service configuration data and a mapping table between identifiers/types of terminal devices (HGU/VRG) and user data configuration templates according to actual needs, and is used for starting an online discovery process of the ONUs and controlling the corresponding HGU/VRG to respectively complete an accurate data configuration process according to a mapping relationship after the identifiers/types of terminal devices, that is, the ONUs, are acquired. The service configuration data is only related to specific services, while not related to the types of the ONUs.

For the HGU300, the service configuration data is totally distributed according to the corresponding user data configuration templates and taken into effect on the HGU300 side; for the ONUs of the VRG type, the service configuration data is divided into two parts according to the corresponding configuration templates; line unrelated service data is distributed to a virtual VRGolt400 module on the OLT100 side; and the line-related data is distributed to the VRGonu500 on a remote ONU side, and management and configuration of the virtual remote gateway are realized by the virtual remote gateway VRGolt400 on the OLT side and a remote line terminal VRGonu500.

The ODN200 is configured to serve as a direct physical connection channel between the OLT100 and the ONUs when the ONUs of different quantities (including but not limited to the HGU300 and VRGonu500) are connected under corresponding PON ports of the OLT100, and may be composed of a combination of multiple passive optical physical devices, connecting cables of the devices and the like.

The HGU300 is configured to play a role of accessing a terminal device into the xPON network, receives management of OLT200 and realizes local service marking, forwarding, routing and other functions according to configuration distributed by the OLT200.

The VRGolt400 serves as an OLT software module of the virtual remote gateway, receives the management of the OLT200 and realizes service marking, forwarding, routing and other non-line configuration functions of the virtual remote gateway according to the configuration distributed by the OLT200.

The VRGonu500 serves as a remote line terminal of the virtual remote gateway, is an entity terminal part of the virtual remote gateway, is positioned on the ONU side, receives the management of the OLT200 and realizes line-related configuration and functions according to the configuration distributed by the OLT.

### Embodiment IV

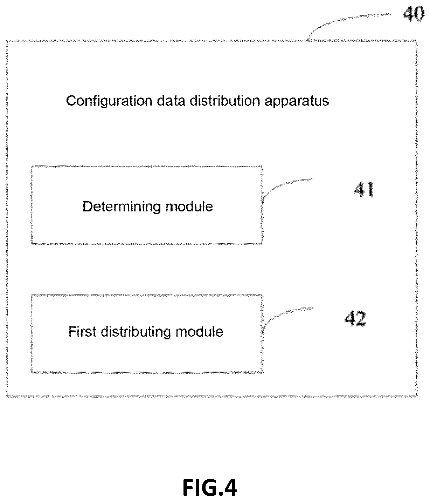

The present embodiment provides a configuration data distribution apparatus. The apparatus is used for realizing the configuration data distribution method provided in embodiments 1 and 2 above, and may be preferably arranged in the OLT. Fig. 4 is a structural block diagram illustrating the configuration data distribution apparatus of the present embodiment. As shown in Fig. 4, the apparatus 40 includes following components:
a determining module 41, configured to determine an encapsulation manner of configuration data according to identifiers of optical network units (ONUs) and a preset corresponding relationship between the identifiers of the ONUs and the encapsulation manner of the configuration data of the ONUs; and
a first distributing module 42, configured to encapsulate the configuration data according to the determined encapsulation manner and distribute the encapsulated configuration data to corresponding gateways according to the encapsulation manner of the ONUs or the identifiers of the ONUs.

The determining module 41 is configured to determine a preset user data configuration template needed for encapsulating the configuration data according to the identifiers of the ONUs and the preset corresponding relationship between the identifiers of the ONUs and the encapsulation manner of the configuration data of the ONUs, wherein a data encapsulation manner is specified in the user data configuration template.

Optionally, the above apparatus 40 may further include: a setting module, configured to create user data configuration templates corresponding to types of the gateways according to the types of the gateways used by the ONUs, and set a corresponding relationship between the user data configuration templates and the identifiers of the ONUs before the encapsulation manner of the configuration data is determined according to the identifiers of the ONUs and the preset corresponding relationship between the identifiers of the ONUs and the encapsulation manner of the configuration data of the ONUs.

The first distributing module 42 may specifically include: a first judging unit, configured to judge whether the configuration data corresponds to an entity home gateway or a virtual remote gateway according to the encapsulation manner of the configuration data when the ONUs corresponding to the current entity home gateway or virtual remote gateway are online; a second judging unit, configured to judge whether the configuration data corresponds to the entity home gateway or the virtual remote gateway according to identifiers reported by the ONUs when the ONUs corresponding to the current entity home gateway or virtual remote gateway are newly online; a first distributing unit, configured to distribute the configuration data to a virtual remote gateway module and line units in a user home according to functional partitioning of the virtual remote gateway module on an optical line terminal (OLT) and the line units in the user home under a condition that the configuration data is judged to correspond to the virtual remote gateway; and a second distributing unit, configured to distribute service configuration data to the entity home gateway through an OAM/OMCI channel under a condition that the configuration data is judged to correspond to the entity home gateway.

Optionally, the above apparatus 40 may further include: a second distributing module, configured to judge whether the configuration data is service-related data or line-related data after the encapsulated configuration data is distributed to the corresponding gateways according to the encapsulation manner of the ONUs or the identifiers of the ONUs under the condition that the configuration data is judged to correspond to the virtual remote gateway, distribute the service-related data to a gateway virtual unit on the OLT side and take into effect if the configuration data is the service-related data, and distribute the line-related data to a remote line unit through the extended OAM/OMCI channel if the configuration data is the line-related data.

### Industrial Applicability

In the configuration data distribution process of embodiments of the present invention, the configuration data is encapsulated according to a preset configuration data encapsulation manner corresponding to identifiers of terminals and distributed to corresponding gateways according to the configuration data encapsulation manner or the identifiers of the terminals, so that the terminals using different gateways are managed and configured in a unified manner.

## Claims

1. A configuration data distribution method, performed by an optical line terminal, OLT, comprising:
determining (101) an encapsulation manner of configuration data according to an identifier of an Optical Network Unit, ONU, and a preset corresponding relationship between identifiers of ONUs and encapsulation manners;
encapsulating (102) the configuration data according to the determined encapsulation manner;
when the encapsulated configuration data corresponds to an entity home gateway, distributing the encapsulated configuration data to the entity home gateway through an extended Operation Administration and Maintenance, OAM, /ONU Management and Control Interface, OMCI, channel; and
when the encapsulated configuration data corresponds to a virtual remote gateway, distributing the encapsulated configuration data to a virtual remote gateway module of the OLT and a line unit of the ONU according to functional partitioning of the virtual remote gateway module and the line unit.

2. The method according to claim 1, wherein the determining (101) an encapsulation manner of configuration data according to an identifier of an ONU, and a preset corresponding relationship between identifiers of ONUs and encapsulation manners comprises:
determining a preset user data configuration template needed for encapsulating the configuration data according to the identifier of the ONU and the preset corresponding relationship between the identifiers of ONUs and the encapsulation manners, wherein a data encapsulation manner is specified in the user data configuration template.

3. The method according to claim 2, further comprising:
creating user data configuration templates corresponding to types of the gateways according to the types of the gateways used by the ONUs, and setting a corresponding relationship between the user data configuration templates and the identifiers of the ONUs before determining the encapsulation manner of the configuration data according to the identifiers of the ONUs and the preset corresponding relationship between the identifiers of the ONUs and the encapsulation manner of the configuration data of the ONUs.

4. The method according to claim 1, further comprising:
judging whether the encapsulated configuration data corresponds to an entity home gateway or a virtual remote gateway according to the determined encapsulation manner when the ONU is online;
judging whether the encapsulated configuration data corresponds to the entity home gateway or the virtual remote gateway according to the identifier reported by the ONU when the ONU is newly online.

5. The method according to any one of claims 1-4, further comprising:
determining whether the configuration data is service-related data or line-related data, when the encapsulated configuration data corresponds to a virtual remote gateway;
in response to determining that the configuration data is service-related data, distributing the service-related data to a gateway virtual unit on the OLT side and taking into effect; and
in response to determining that the configuration data is the line-related data, distributing the line-related data to a remote line unit through the extended OAM/OMCI channel.

6. A configuration data distribution apparatus, applied in an optical line terminal, OLT, comprising:
a determining module (41), configured to determine an encapsulation manner of configuration data according to an identifier of an Optical Network Unit, ONU, and a preset corresponding relationship between identifiers of ONUs and encapsulation manners; and
a first distributing module (42), configured to encapsulate the configuration data according to the determined encapsulation manner,
wherein the first distributing module (42) comprises a first distributing unit and a second distributing unit,
when the encapsulated configuration data corresponds to an entity home gateway, the second distributing unit is configured to distribute the encapsulated configuration data to the entity home gateway through an extended Operation Administration and Maintenance, OAM, /ONU Management and Control Interface, OMCI, channel,
when the encapsulated configuration data corresponds to a virtual remote gateway, the first distributing unit is configured to distribute the encapsulated configuration data to a virtual remote gateway module of the OLT and a line unit of the ONU according to functional partitioning of the virtual remote gateway module and the line unit.

7. The apparatus according to claim 6, wherein the determining module (41) is configured to:
determine a preset user data configuration template needed for encapsulating the configuration data according to the identifier of the ONU and the preset corresponding relationship between the identifiers of ONUs and the encapsulation manners, wherein a data encapsulation manner is specified in the user data configuration template.

8. The apparatus according to claim 7, further comprising:
a setting module, configured to create user data configuration templates corresponding to types of the gateways according to the types of the gateways used by the ONUs, and set a corresponding relationship between the user data configuration templates and the identifiers of the ONUs before the encapsulation manner of the configuration data is determined according to the identifiers of the ONUs and the preset corresponding relationship between the identifiers of the ONUs and the encapsulation manner of the configuration data of the ONUs.

9. The apparatus according to claim 6, wherein the first distributing module (42) further comprises:
a first judging unit, configured to judge whether the encapsulated configuration data corresponds to an entity home gateway or a virtual remote gateway according to the determined encapsulation manner when the ONU is online; and
a second judging unit, configured to judge whether the encapsulated configuration data corresponds to an entity home gateway or a virtual remote gateway according to the identifier reported by the ONU when the ONU is newly online.

10. The apparatus according to any one of claims 6-9, further comprising:
a second distributing module, configured to judge whether the configuration data is service-related data or line-related data, when the encapsulated configuration data corresponds to a virtual remote gateway, distribute the service-related data to a gateway virtual unit on the OLT side and take into effect in response to determining that the configuration data is the service-related data, and distribute the line-related data to a remote line unit through the extended OAM/OMCI channel in response to determining that the configuration data is the line-related data.

## Patentansprüche

1. Auslegungsdatenverteilungsverfahren, das von einem optischen Leitungsendgerät, OLT, durchgeführt wird und Folgendes umfasst:
Bestimmen (101) einer Kapselungsweise von Auslegungsdaten gemäß einer Kennung einer optischen Netzwerkeinheit, ONU, und einer voreingestellten entsprechenden Beziehung zwischen Kennungen von ONUs und Kapselungsweisen;
Kapseln (102) der Auslegungsdaten gemäß der bestimmten Kapselungsweise;
wenn die gekapselten Auslegungsdaten einem Entitätshomegateway entsprechen, Verteilen der gekapselten Auslegungsdaten über einen erweiterten Betriebs-. Administrations- und Wartungs(OAM)/ONU-Verwaltungs- und Steuerschnittstellen(OMCI)-Kanal an das Entitätshomegateway und
wenn die gekapselten Auslegungsdaten einem virtuellen entfernten Gateway entsprechen, Verteilen der gekapselten Auslegungsdaten gemäß einer funktionellen Partitionierung eines virtuellen entfernten Gatewaymoduls und einer Leitungseinheit an das virtuelle entfernte Gatewaymodul des OLT und die Leitungseinheit der ONU.

2. Verfahren nach Anspruch 1, wobei das Bestimmen (101) einer Kapselungsweise von Auslegungsdaten gemäß einer Kennung einer ONU und einer voreingestellten entsprechenden Beziehung zwischen Kennungen von ONUs und Kapselungsweisen Folgendes umfasst:
Bestimmen einer voreingestellten Benutzerdatenauslegungsvorlage, die zum Kapseln der Auslegungsdaten gemäß der Kennung der ONU und der voreingestellten entsprechenden Beziehung zwischen den Kennungen von ONUs und den Kapselungsweisen erforderlich ist, wobei eine Datenkapselungsweise in der Benutzerdatenauslegungsvorlage spezifiziert ist.

3. Verfahren nach Anspruch 2, das ferner Folgendes umfasst:
Erstellen von Benutzerdatenauslegungsvorlagen, die Typen der Gateways entsprechen, gemäß den Typen der Gateways, die von den ONUs verwendet werden, und Einstellen einer entsprechenden Beziehung zwischen den Benutzerdatenauslegungsvorlagen und den Kennungen der ONUs vor dem Bestimmen der Kapselungsweise der Auslegungsdaten gemäß den Kennungen der ONUs und der voreingestellten entsprechenden Beziehung zwischen den Kennungen der ONUs und der Kapselungsweise der Auslegungsdaten der ONUs.

4. Verfahren nach Anspruch 1, das ferner Folgendes umfasst:
Beurteilen gemäß der bestimmten Kapselungsweise, ob die gekapselten Auslegungsdaten einem Entitätshomegateway oder einem virtuellen entfernten Gateway entsprechen, wenn die ONU online ist;
Beurteilen gemäß der Kennung, die vom ONU gemeldet wird, ob die gekapselten Auslegungsdaten dem Entitätshomegateway oder dem virtuellen entfernten Gateway entsprechen, wenn die ONU erneut online ist.

5. Verfahren nach einem der Ansprüche 1-4, das ferner Folgendes umfasst:
Bestimmen, ob die Auslegungsdaten dienstbezogene Daten oder leitungsbezogene Daten sind, wenn die gekapselten Auslegungsdaten einem virtuellen entfernten Gateway entsprechen;
in Reaktion auf das Bestimmen, dass die Auslegungsdaten dienstbezogene Daten sind, Verteilen der dienstbezogenen Daten an eine virtuelle Gatewayeinheit auf der OLT-Seite und Wirksammachen und
in Reaktion auf das Bestimmen, dass die Auslegungsdaten die leitungsbezogenen Daten sind, Verteilen der leitungsbezogenen Daten über den erweiterten OAM/OMCI-Kanal an eine entfernte Leitungseinheit.

6. Auslegungsdatenverteilungsvorrichtung, die auf ein optisches Leitungsendgerät, OLT, angewendet wird und Folgendes umfasst:
ein Bestimmungsmodul (41), das dazu ausgelegt ist, eine Kapselungsweise von Auslegungsdaten gemäß einer Kennung einer optischen Netzwerkeinheit, ONU, und einer voreingestellten entsprechenden Beziehung zwischen Kennungen von ONUs und Kapselungsweisen zu bestimmen; und
ein erstes Verteilungsmodul (42), das dazu ausgelegt ist, die Auslegungsdaten gemäß der bestimmten Kapselungsweise zu kapseln,
wobei das erste Verteilungsmodul (42) eine erste Verteilungseinheit und eine zweite Verteilungseinheit umfasst,
wenn die gekapselten Auslegungsdaten einem Entitätshomegateway entsprechen, ist die zweite Verteilungseinheit dazu ausgelegt, die gekapselten Auslegungsdaten über einen erweiterten Betriebs-. Administrations- und Wartungs(OAM)/ONU-Verwaltungs- und Steuerschnittstellen(OMCI)-Kanal an das Entitätshomegateway zu verteilen,
wenn die gekapselten Auslegungsdaten einem virtuellen entfernten Gateway entsprechen, ist die erste Verteilungseinheit dazu ausgelegt, die gekapselten Auslegungsdaten gemäß einer funktionellen Partitionierung eines virtuellen entfernten Gatewaymoduls und einer Leitungseinheit an das virtuelle entfernte Gatewaymodul des OLT und die Leitungseinheit der ONU zu verteilen.

7. Vorrichtung nach Anspruch 6, wobei das Bestimmungsmodul (41) zu Folgendem ausgelegt ist:
Bestimmen einer voreingestellten Benutzerdatenauslegungsvorlage, die zum Kapseln der Auslegungsdaten gemäß der Kennung der ONU und der voreingestellten entsprechenden Beziehung zwischen den Kennungen von ONUs und den Kapselungsweisen erforderlich ist, wobei eine Datenkapselungsweise in der Benutzerdatenauslegungsvorlage spezifiziert ist.

8. Vorrichtung nach Anspruch 7, die ferner Folgendes umfasst:
ein Einstellungsmodul, das dazu ausgelegt ist, Benutzerdatenauslegungsvorlagen, die Typen der Gateways entsprechen, gemäß den Typen der Gateways, die von den ONUs verwendet werden, zu erstellen und eine entsprechende Beziehung zwischen den Benutzerdatenauslegungsvorlagen und den Kennungen der ONUs einzustellen, bevor die Kapselungsweise der Auslegungsdaten gemäß den Kennungen der ONUs und der voreingestellten entsprechenden Beziehung zwischen den Kennungen der ONUs und der Kapselungsweise der Auslegungsdaten der ONUs bestimmt wird.

9. Vorrichtung nach Anspruch 6, wobei das erste Verteilungsmodul (42) ferner Folgendes umfasst:
eine erste Beurteilungseinheit, die dazu ausgelegt ist, gemäß der bestimmten Kapselungsweise, zu bestimmen, ob die gekapselten Auslegungsdaten einem Entitätshomegateway oder einem virtuellen entfernten Gateway entsprechen, wenn die ONU online ist; und
eine zweite Beurteilungseinheit, die dazu ausgelegt ist, gemäß der Kennung, die vom ONU gemeldet wird, zu bestimmen, ob die gekapselten Auslegungsdaten einem Entitätshomegateway oder einem virtuellen entfernten Gateway entsprechen, wenn die ONU erneut online ist.

10. Vorrichtung nach einem der Ansprüche 6-9, die ferner Folgendes umfasst:
ein zweites Verteilungsmodul, das dazu ausgelegt ist zu bestimmen, ob die Auslegungsdaten dienstbezogene Daten oder leitungsbezogene Daten sind, wenn die gekapselten Auslegungsdaten einem virtuellen entfernten Gateway entsprechen, in Reaktion auf das Bestimmen, dass die Auslegungsdaten dienstbezogene Daten sind, die dienstbezogenen Daten an eine virtuelle Gatewayeinheit auf der OLT-Seite zu verteilen und wirksam zu machen, und in Reaktion auf das Bestimmen, dass die Auslegungsdaten die leitungsbezogenen Daten sind, die leitungsbezogenen Daten über den erweiterten OAM/OMCI-Kanal an eine entfernte Leitungseinheit zu verteilen.

## Revendications

1. Procédé de distribution de données de configuration, réalisé par un terminal de ligne optique, OLT, comprenant :
la détermination (101) d'un mode d'encapsulation de données de configuration conformément à un identifiant d'une unité de réseau optique, ONU, et d'une relation correspondante prédéfinie entre identifiants des ONU et modes d'encapsulation ;
l'encapsulation (102) des données de configuration conformément au mode d'encapsulation déterminé ;
lorsque les données de configuration encapsulées correspondent à une passerelle locale d'entité, la distribution des données de configuration encapsulées à la passerelle locale d'entité à travers un canal étendu d'opération, administration et maintenance, OAM, /d'interface de gestion et de commande d'ONU, OMCI ; et
lorsque les données de configuration encapsulées correspondent à une passerelle distante virtuelle, la distribution des données de configuration encapsulées à un module de passerelle distante virtuelle de l'OLT et à une unité de ligne de l'ONU conformément au partitionnement fonctionnel du module de passerelle distante virtuelle et de l'unité de ligne.

2. Procédé selon la revendication 1, dans lequel la détermination (101) d'un mode d'encapsulation de données de configuration conformément à un identifiant d'une ONU, et d'une relation correspondante prédéfinie entre identifiants des ONU et modes d'encapsulation comprend :
la détermination d'un modèle de configuration de données d'utilisateur prédéfini nécessaire pour encapsuler les données de configuration conformément à l'identifiant de l'ONU et à la relation correspondante prédéfinie entre les identifiants des ONU et les modes d'encapsulation, dans lequel un mode d'encapsulation de données est spécifié dans le modèle de configuration de données d'utilisateur.

3. Procédé selon la revendication 2, comprenant en outre :
la création de modèles de configuration de données d'utilisateur correspondant aux types des passerelles conformément aux types des passerelles utilisées par les ONU, et la définition d'une relation correspondante entre les modèles de configuration de données d'utilisateur et les identifiants des ONU avant la détermination du mode d'encapsulation des données de configuration conformément aux identifiants des ONU et à la relation correspondante prédéfinie entre les identifiants des ONU et le mode d'encapsulation des données de configuration des ONU.

4. Procédé selon la revendication 1, comprenant en outre :
l'évaluation du fait que les données de configuration encapsulées correspondent à une passerelle locale d'entité ou à une passerelle distante virtuelle conformément au mode d'encapsulation déterminé lorsque l'ONU est en ligne;
l'évaluation du fait que les données de configuration encapsulées correspondent à la passerelle locale d'entité ou à la passerelle distante virtuelle conformément à l'identifiant rapporté par l'ONU lorsque l'ONU est nouvellement en ligne.

5. Procédé selon l'une quelconque des revendications 1 à 4, comprenant en outre :
la détermination du fait que les données de configuration sont des données associées au service ou des données associées à la ligne, lorsque les données de configuration encapsulées correspondent à une passerelle distante virtuelle ;
en réponse à la détermination que les données de configuration sont des données associées au service, la distribution des données associées au service à une unité virtuelle de passerelle sur le côté OLT et leur prise en compte ; et
en réponse à la détermination que les données de configuration sont les données associées à la ligne, la distribution des données associées à la ligne à une unité de ligne distante à travers le canal étendu d'OAM/d'OMCI.

6. Appareil de distribution de données de configuration, appliqué dans un terminal de ligne optique, OLT, comprenant :
un module de détermination (41) configuré pour déterminer un mode d'encapsulation de données de configuration conformément à un identifiant d'une unité de réseau optique, ONU, et d'une relation correspondante prédéfinie entre identifiants des ONU et modes d'encapsulation ; et
un premier module de distribution (42), configuré pour encapsuler les données de configuration conformément au mode d'encapsulation déterminé,
dans lequel le premier module de distribution (42) comprend une première unité de distribution et une seconde unité de distribution,
lorsque les données de configuration encapsulées correspondent à une passerelle locale d'entité, la seconde unité de distribution est configurée pour distribuer les données de configuration encapsulées à la passerelle locale d'entité à travers un canal étendu d'opération, administration et maintenance, OAM, /d'interface de gestion et de commande d'ONU, OMCI,
lorsque les données de configuration encapsulées correspondent à une passerelle distante virtuelle, la première unité de distribution est configurée pour distribuer les données de configuration encapsulées à un module de passerelle distante virtuelle de l'OLT et à une unité de ligne de l'ONU conformément au partitionnement fonctionnel du module de passerelle distante virtuelle et de l'unité de ligne.

7. Appareil selon la revendication 6, dans lequel le module de détermination (41) est configuré pour :
déterminer un modèle de configuration de données d'utilisateur prédéfini nécessaire pour encapsuler les données de configuration conformément à l'identifiant de l'ONU et à la relation correspondante prédéfinie entre les identifiants des ONU et les modes d'encapsulation, dans lequel un mode d'encapsulation de données est spécifié dans le modèle de configuration de données d'utilisateur.

8. Appareil selon la revendication 7, comprenant en outre :
un module de définition, configuré pour créer des modèles de configuration de données d'utilisateur correspondant aux types des passerelles conformément aux types des passerelles utilisées par les ONU, et définir une relation correspondante entre les modèles de configuration de données d'utilisateur et les identifiants des ONU avant que le mode d'encapsulation des données de configuration soit déterminé conformément aux identifiants des ONU et à la relation correspondante prédéfinie entre les identifiants des ONU et le mode d'encapsulation des données de configuration des ONU.

9. Appareil selon la revendication 6, dans lequel le premier module de distribution (42) comprend en outre :
une première unité d'évaluation, configurée pour évaluer si les données de configuration encapsulées correspondent à une passerelle locale d'entité ou à une passerelle distante virtuelle conformément au mode d'encapsulation déterminé lorsque l'ONU est en ligne ; et
une seconde unité d'évaluation, configurée pour évaluer si les données de configuration encapsulées correspondent à une passerelle locale d'entité ou à une passerelle distante virtuelle conformément à l'identifiant rapporté par l'ONU lorsque l'ONU est nouvellement en ligne.

10. Appareil selon l'une quelconque des revendications 6 à 9, comprenant en outre :
un second module de distribution, configuré pour évaluer si les données de configuration sont des données associées au service ou des données associées à la ligne, lorsque les données de configuration encapsulées correspondent à une passerelle distante virtuelle, distribuer les données associées au service à une unité virtuelle de passerelle sur le côté OLT et les prendre en compte en réponse à la détermination que les données de configuration sont les données associées au service, et distribuer les données associées à la ligne à une unité de ligne distante à travers le canal étendu d'OAM/d'OMCI en réponse à la détermination que les données de configuration sont les données associées à la ligne.
